(19) Europäisches Patentamt
European Patent Office
Office européen des brevets

(11) Veröffentlichungsnummer : **0 355 683 B1**

(12) # EUROPÄISCHE PATENTSCHRIFT

(45) Veröffentlichungstag der Patentschrift : **11.11.92 Patentblatt 92/46**

(51) Int. Cl.$^5$ : **C09J 4/06,** C08F 265/04, // (C08F265/04, 220:26)

(21) Anmeldenummer : **89115081.5**

(22) Anmeldetag : **16.08.89**

(54) **Strahlenvernetzbare Haftklebegemische.**

(30) Priorität : **20.08.88 DE 3828400**

(43) Veröffentlichungstag der Anmeldung : **28.02.90 Patentblatt 90/09**

(45) Bekanntmachung des Hinweises auf die Patenterteilung : **11.11.92 Patentblatt 92/46**

(84) Benannte Vertragsstaaten : **DE FR GB IT NL**

(56) Entgegenhaltungen :
**AU-A- 563 029**
**US-A- 4 049 483**
**US-A- 4 297 158**
**DATABASE WPI, Nr. 78-42878A [24], Derwent Publications Ltd, Londen, GB**

(73) Patentinhaber : **BASF Aktiengesellschaft**
**Carl-Bosch-Strasse 38**
**W-6700 Ludwigshafen (DE)**

(72) Erfinder : **Rehmer, Gerd, Dr.**
**Koenigsberger Strasse 1**
**W-6712 Bobenheim-Roxheim (DE)**

**EP 0 355 683 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Strahlenvernetzbare Haftklebegemische, die olefinisch ungesättigte polymerisierbare Verbindungen (oft Reaktivverdünner genannt) enthalten, müssen eine gute Lagerungsstabilität auch bei höheren Temperaturen aufweisen. Ihre Viskosität darf dabei nicht wesentlich ansteigen, da die Beschichtung von Substraten sonst erschwert wird. Auch werden bei der Herstellung von strahlenvernetzbaren Haftklebegemischen häufig erhöhte Temperaturen angewandt, so daß hier unerwünschte Polymerisationen eintreten können. Um dies zu verhindern, werden an derartigen strahlenvernetzbaren Haftklebegemischen häufig Stabilisatoren zugesetzt, die eine vorzeitige Polymerisation und damit einen Anstieg der Viskosität verhindern sollen. Derartige Inhibitoren verhindern jedoch häufig eine gewünschte, strahleninduzierte Polymerisation der Gemische.

Aus der australischen Patentschrift 563 029 ist ein Verfahren zur Herstellung von selbsthaftenden Überzügen bekannt, bei dem Aufträge aus einer gießfähigen Masse, die olefinisch ungesättigte polymerisierbare Verbindungen enthält, durch Bestrahlen mit energiereichen Strahlen in den gebrauchsfertigen Zustand überführt werden. Als olefinisch ungesättigte polymerisierbare Verbindungen enthalten diese bekannte Massen vor allem Alkylether oder Ester der 2,3- und/oder 1,3-Dihydroxypropylacrylate mit gesättigten Carbonsäuren, wobei Monoalkylether und Monoalkylcarbonsäureester der Dihydroxypropylacrylsäureester von besonderer Bedeutung sind. Zusätzlich zu derartigen Dihydroxypropyl(meth)acrylsäureester-Derivaten enthalten jene Massen im allgemeinen 5 bis 120 Gew.%, bezogen auf die Menge der Dihydroxypropyl(meth)acrylsäureester-Derivate an Polymeren einer Glastemperatur unter 0°C und eines K-Wertes von 20 bis 80. Bei der Herstellung derartiger Haftklebegemische treten jedoch häufig Wandbeläge in den Kesseln auf, die schwer entfernt werden können. Auch weisen derartige Haftklebegemische eine unbefriedigende Lagerstabilität auf und bei ihrem Auftragen auf die üblichen Substrate müssen meist Temperaturen über 80°C angewandt werden.

Ziel dieser Erfindung ist daher ein Verfahren zur Herstellung von Haftklebegemischen, bei dem Kesselwandbeläge weitgehend vermieden werden. Ein weiteres Ziel ist die Herstellung strahlenvernetzbarer Haftklebegemische, deren Viskosität bei langerer Lagerung praktisch nicht ansteigt, die bei verhältnismäßig niedriger Temperatur aufgetragen werden können und die sowohl durch Elektronenstrahlen als auch durch UV-Licht an der Luft vernetzbar sind.

Es wurde nun gefunden, daß man strahlenvernetzbare Haftklebemische aus

(a) 5 bis 120 Gew.-Teilen Polymeren einer Glastemperatur unter 0°C und eines K-Wertes von 20 bis 80 und

(b) 100 Gew.-Teilen Derivaten von Dihydroxypropyl(meth)acrylsäureestern,

mit vorteil herstellen kann, indem man 30 bis 85 gew.%ige Lösungen der Polymeren (a) mit den Derivaten (b) und (c) 0,01 bis 0,1 Gew.%, bezogen auf die Polymeren (a), einer tertiären Aminoverbindung mit einer copolymerisierbaren olefinischen Doppelbindung mischt, das Gemisch auf Temperaturen von 80 bis 120°C bis zu 2 Stunden erhitzt und dann das Lösungsmittel ggf. bei vermindertem Druck abtrennt.

Derartige Haftklebegemische, bei deren Herstellung an den Kesselwänden praktischen keine Beläge auftreten, sind viele Monate lang im Dunkeln lagerbar, ohne daß sich ihre Viskosität nennenswert erhöht, und bei dem Auftragen auf Substratoberflächen brauchen im allgemeinen keine Temperaturen über 70°C angewandt zu werden.

Aus der britischen Patentschrift 1 448 737 sind zwar schon strahlenhärtbare, nicht gelierte Massen aus Estern mehrwertiger Alkohole bekannt, die tertiäre Aminogruppen aufweisen, doch enthalten diese Massen keine Polymeren einer Glastemperatur unter 80°C und eines K-Wertes von 20 bis 80. Bei ihnen handelt es sich vielmehr um an der Luft durch UV-Licht härtbare Massen für Überzugs- oder Anstrichmittel zum Streichen von Papier, für Tinten und Druckfarben, die in gehärtetem Zustand mit Hilfe verdünnter Laugen wieder leicht abbaubar sein sollen.

Als Polymere (a) eignen sich solche einer Glastemperatur unter 0°C und eines K-Wertes bestimmt nach DIN 53726 in 1 %iger Lösung in Tetrahydrofuran bei 25°C von 20 bis 80, die in an sich üblicher weise unter Verwendung radikalischer Initiatoren in Emulsion, Suspension, in der Schmelze oder vorzugsweise in Lösung durch Polymerisation hergestellt sein können. Geeignet sind beispielsweise Polymerisate oder Mischpolymerisate aus monoolefinisch ungesättigten Carbonsäureestern von geradkettigen oder verzweigten, 1 bis 12 C-Atomen in den Alkylgruppen enthaltenden Estern der Acryl- und/oder Methacrylsäure, wie Methyl-, Ethyl-, Propyl-, Butyl-, Pentyl-, Hexyl-, 2-Ethylhexyl-, Octyl-, Decyl- und Dodecylacrylat und -methacrylat sowie von Vinylestern, wie Vinylacetat, Vinylpropionat, Vinylethylhexanoat, Vinylversatat und Vinyllaurat. Neben den Carbonsäureestern können auch andere olefinisch ungesättigte Monomere, sowie meist 3 bis 5 C-Atome aufweisende Mono- oder Dicarbonsäuren, z.B. Acryl-, Methacryl-, Malein-, Fumar-, Itacon- oder Crotonsäure sowie saure oder neutrale Alkylester der ungesättigten Dicarbonsäuren einpolymerisiert sein. Als weiterhin geeignete Comonomere seien Monomere mit Hydroxylgruppen, wie Hydroxyethyl-, -propyl-, -butyl-acrylat und -methacrylat sowie die von Oligo- bzw. Polymeren des Ethylen- oder Propylenoxids abgeleiteten ω-Hydroxypropylalkoxyacrylate und -methacrylate, Hydroxyalkylvinylether, wie Hydroxyethyl- und Hydroxypropylvinylether, Dihydroxyverbindungen, wie 2,3-Dihydroxypropylacrylat und -methacrylat, Chlorhydroxypropylacrylat sowie vinylaromatische Monomere, wie Styrol, Vinyltoluol, ferner Amide α,β-olefinisch ungesättigter Mono- und/oder Dicarbonsäuren, wie Acryl- und Methacrylamid, oder Nitrile, wie Acrylnitril und Methacrylnitril, Vinylhalogenide wie Vinylchlorid und Vinylidenchlorid, 1,3-Diene, wie Butadien und Isopren und Alkylester α,β-monoolefinisch ungesättigter Dicarbonsäuren wie Maleinsäurediethyl- und -dibutylester genannt. Die Polymeren (a) sind in den neuen strahlenvernetzbaren Haftklebegemischen, vorzugsweise in Mengen von 20 bis 100 Gew.-Teilen, enthalten. Besonders bevorzugte Polymere (a) sind Copolymerisate aus Acryl- und/oder Methacrylsäureestern, Vinylestern und 0, 5 bis 5 Gew.%, bezogen auf die Polymerisate (a) an α,β-monoolefinisch ungesättigten Mono- und/oder Dicarbonsäuren und/oder deren Amide der oben genannten Art, die ggf. bis zu 30 Styrol und/oder α-Methylstyrol einpolymerisiert enthalten.

Geeignete Derivate von Dihydroxypropylacrylsäureestern (b) sind sowohl die 2,3-Dihydroxypropyl-(1)- als auch die 1,3-Dihydroxypropyl-(2)-Verbindungen. In Frage kommen vor allem die Alkylether und Ester mit gesättigten Carbonsäuren, wobei Monoalkylether und Monoalkylcarbonsäureester der Dihydroxypropyl(meth)acrylsäureester von besonderer Bedeutung sind. Insbesondere wegen ihrer leichten Zugänglichkeit bevorzugte Derivate der Dihydroxypropylacrylate haben die allgemeinen Formeln

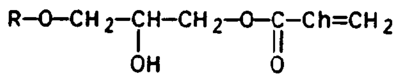 (I)

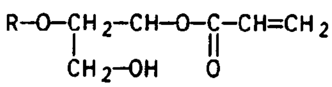 (II)

in denen R für 4 bis 16, insbesondere 6 bis 12 C-Atome aufweisende Alkyl- oder Acylgruppen steht. Beispiele hierfür sind die Mono-n-butyl-, Mono-2-ethylhexyl-, Monoisononyl-, Monoisooctyl-, Monodecyl- und Monolaurylether des 2,3-Dihydroxypropylacrylats und des 1,3-Dihydroxyisopropylacrylats sowie deren Monoisovaleriansäureester, Mono-2-ethylhexansäureester, Mono-versaticsäureester, Monolaurinsäureester und Monopalmitin säureester. Derartige Derivate der Dihydroxypropyl(meth)acrylate können auch als Gemische eingesetzt werden. Derivate (b) dieser Art können leicht, z.B. nach den Angaben in der australischen Patentschrift 563 029 hergestellt werden. Geeignete tertiäre Aminoverbindungen (c) mit einer copolymerisierbaren olefinischen Doppelbindung sind z.B. N,N-Dimethylethylaminoethyl(meth)-acrylat, N,N-Diethylaminoethyl-(meth)-acrylat, 3-N-Morpholinopropyl(meth)-acrylamid, 4-Methacrylamido-2,2,6,6-tetramethylpiperidin, 2-N-Morpholinoethyl(meth)acrylat.

Derartige tertiäre Aminoverbindungen sind mit den Derivaten (b) copolymerisierbar und weisen vorzugsweise nur eine copolymerisierbare olefinische Doppelbindung auf.

Bei der Herstellung der erfindungsgemäßen Haftklebegemische werden die Polymeren (a) in Form einer 30 bis 85 gew.%igen, vorzugsweise in Form einer 40 bis 60 gew.%igen Lösung, insbesondere in Essigsäureethylester, Toluol, Isopropanol, Isobutanol, Ethanol, Xylol, Benzol, Benzinen eines Siedebereichs von 60 - 140°C und Ketonen, wie Methylethylketon u.a. eingesetzt. von besonderem Interesse sind als Lösungsmittel hierfür Essigsäureethylester, Tetrahydrofuran, Toluol sowie Xylol.

Die Lösungen der Polymerisate (a) können mit den Derivaten (b) und den tertiären Aminoverbindungen (c) in beliebiger Reihenfolge gemischt werden, wobei die Lösungen der Polymeren (a) ggf. erhöhte Temperaturen, beispielsweise von 50 bsi 100°C aufweisen können. Das Gemisch wird dann bis zu 2 Stunden lang auf Temperaturen von 80 bis 120°C erwärmt und anschließend die Lösungsmittel ggf. bei vermindertem Druck abgedampft. Dabei können zum Abdampfen der Lösungsmittel Temperaturen von 60 bis 150°C und Drucke bis herab zu 0,01 bar angewandt werden.

vor allem wenn die strahlenvernetzbaren Haftklebegemische nach ihrer Herstellung durch Uv-Strahlen vernetzt werden sollen, ist es von vorteil, den Gemischen während oder nach ihrer Herstellung übliche Photoinitiatoren zuzusetzen. Geeignete Photoinitiatoren sind z.B. Acylphosphinoxide, wie 2,4,6-Trimethylbenzoyldiphenylphosphinoxid und 2,4,6-Trimethylbenzoylphenylphosphinsäurethylester, Benzylketale, wie Benzyldimethylketal, Benzoinether, wie Benzoinisopropylether, Benzil, Acetophenonderivate, wie Dialkoxyacetophenone, Benzophenon und Benzophenonderivate, wie 4-Hydroxybenzophenon, α-Acyloximester, wie Benzil-(O-ethoxycarbonyl)-α-monoxim, n-Halogenketone, wie para-tert-Butyl-trichloroacetophenon,

Thioxanthon und ferner Anthrachinon. von besonderem Interesse als Photoinitiatoren sind Benzophenon, 3-Hydroxybenzophenon, 4-Hydroxybenzophenon und Benzophenoncarbonsäuren, wie Benzophenon-2-carbonsäure, Benzophenon-3-carbonsäure, Benzophenon-4-carbonsäure, und Acylphosphinoxide wie 2,4,6-Trimethylbenzoyldiphenylphosphinoxid, und 2,4,6-Trimethylbenzoylphenylphosphin säureethylester sowie Thioxanthon.

In manchen Fällen ist es von Vorteil, bei dem Verfahren den Haftklebegemischen übliche klebrigmachende Harze (tackifier) in Mengen bis zu 50 %, vorzugsweise in Mengen von 2, 5 bis 25 Gew.%, bezogen auf die fertigen Mischungen zuzusetzen. Beispiele hierfür sind Balsamharze, Terpenharze, Kolophoniumharze, hydriertes Kolophonium, Ester des Kolophoniums oder hydrierten Kolophoniums, wie der Glycerinester, der Pentaerythritester, der Ethylenglykolester, Diethylenglykolester, Methylester oder der Propylester des (hydrierten) Kolophoniums. Ester des bei der vollständigen Hydrierung des Kolophoniums entstehenden Hydroabiethylalkohols sind ebenfalls geeignet, z.B. der Benzoesäure- oder Phthalsäureester. Gut klebrigmachende Harze sind ferner die üblichen Terpenphenolharze, Alkylphenolharze, Ketonharze, wie Kondensationsprodukte des Cyclohexanons, Aldehydharze, Styrolcopolymerisate, die beispielsweise durch Polymerisation von Styrol mit Methacrylestern, Vinyltoluol oder Isobutylen erhalten werden. Geeignet sind auch Cumaronharze, Indenharze, Kohlenwasserstoffharze, ferner niedermolekulare Polyvinylidenisobutylether oder Polyolefine, wie niedermolekulare Polyisobutylene. Die Menge an derart gen klebrig-machenden Harzen soll vorzugsweise 5 bis 40 Gew.%, bezogen auf die Menge an Polymeren (a) betragen.

Schließlich können bei dem Verfahren noch geringe Mengen, die meist 0,1 bis 10 Gew.%, bezogen auf die Menge an Derivaten (b), betragen, mehrfach olefinisch ungesättigte Verbindungen zugesetzt werden. In Frage kommen z.B. Acryl- und Methacrylsäureester mehrwertiger Alkanole (mit vorzugsweise 2 bis 12 C-Atomen), wie Butandioldiacrylat-1,4,Triethylenglykol diacrylat, Tetraethylenglykoldiacrylat, Hexandioldiacrylat, Trimethylolpropantriacrylat, Tripropylenglykoldiacrylat, Trimethylolpropantriacrylat, Tripropylenglykoltriacrylat, Pentaerythrittetraacrylat und die entsprechenden Methacrylsäureester, N-Alkylen-(bis)-acrylamide und deren Derivate, wie N-Methylenbisacrylamid, Bis-(N-methylolacrylamid)glykolether, Xylylenbisacrylamid und Bis-(N-methylolacrylamid)diethylenglykolether. Bei besonderen Einsatzgebieten beträgt ihre Menge vorzugsweise 2 bis 6 Gew.%, bezogen auf die Derivate (b). Die neuen strahlenvernetzbaren Haftklebstoffgemische können in üblicher Weise auf die hierfür üblichen Trägermaterialien, beispielsweise Folien aus Polyolefinen, wie Polyethylen und Polypropylen, aus Polyvinylchlorid, oder Polyethylenglykolterephthalat in direktem Auftrag, z.B. durch Rakeln, Rollen, Gießen, Walzen oder mittels Düsen erfolgen. Bei indirekten Auftrag, d.h. nach dem Transferverfahren, können die Haftklebegemische in an sich üblicher Weise zunächst auf einem nicht haftendem Träger, z.B. aus siliconisiertem Papier, aufgebracht, durch Bestrahlen vernetzt und dann auf das gewünschte Trägermaterial, z.B. Weich-PVC-Folie übertragen werden.

Man wählt im allgemeinen Haftklebegemisch-Schichtdicken oberhalb 5, vorteilhaft oberhalb 20 und unter 200 μm, entsprechend Beschichtungen von mehr als 5 bzw. mehr als 20 und weniger als 200 $g/m^2$. Die Aufträge können mit Hilfe der üblichen Beschichtungsvorrichtungen vorgenommen werden. Die Aufträge werden dann bestrahlt. Die Bestrahlung erfolgt meist kurzfristig, mit energiereichen Strahlen, beispielsweise mit Elektronenstrahlen hoher Energie, mit Energiedosen von meist 1 bis 500 kGy (0,5 bis 50 Mrad), vorzugsweise 10 bis 250 kGy (1 bis 25 Mrad). Soweit die Haftklebegemische Fotoinitiatoren der o.g. Art enthalten, können sie auch mit UV-Licht bestrahlt werden. Als UV-Strahler können die üblichen Strahler, z.B. Quecksilberdampfmitteldrucklampen eingesetzt werden, die Leistungen von z.B. 80 bis 100 Watt/cm haben können. Dabei ermöglichen Lampen mit höherer Leistung im allgemeinen eine schnellere Vernetzung.

Die in den folgenden Beispielen angegebenen Teile und Prozente beziehen sich auf das Gewicht.

Herstellung eines Polymeren (a)

Zu einem unter Rückfluß siedenden Gemisch aus 500 Teilen Ethylacetat, 300 Teilen 2-Ethylhexylacrylat, 300 Teilen Vinylacetat und 11 Teilen 2,2′-Azo-bis-isobutyronitril gibt man innerhalb von 2 Stunden 920 Teile 2-Ethylhexylacrylat, 450 Teile Vinylacetat und 30 Teile Acrylsäure. Danach rührt man noch 2 Stunden unter Rückfluß und gibt anschließend innerhalb von 2 1/2 Stunden eine Lösung von 4 Teilen tert.-Butylperpivalat in 360 Teilen Ethylacetat zu und rührt noch 3 Stunden. Anschließend verdünnt man mit Ethylacetat bis zu einem Gehalt an 50 % Copolymerisat. Das Copolymerisat hat den K-Wert 68. Es wird für die folgenden Beispiele und Vergleichsversuche eingesetzt (Copolymerisat A).

Beispiel 1

Zu 1000 Teilen einer 50 %igen Lösung von Copolymerisat A in Ethylacetat gibt man 0,5 Teile N,N-Diethylaminoethylacrylat innerhalb von 2 Stunden unter Rückfluß. Anschließend gibt man 500 Teile eines

Versaticsäuremonoestergemisches aus etwa gleichen Teilen 2,3-Dihydroxypropyl-1-acrylat und 1,3-Dihydroxypropyl-2-acrylat zu und vermindert den Druck nach und nach unter Abdestillieren des Ethylacetats und weiterem Erwärmen bis auf 0,1 bar. Nach dem Abdampfen des Ethylacetats erhält man eine bei Raumtemperatur freifließende Mischung, die bei 50°C die Viskosität 50000 mPas (D = 21,51/s) hat. (= Haftklebegemisch 1)

D = (Schergeschwindigkeit in 1/s)

Vergleichsversuch 1

Man rührt 1000 Teile einer 50 %igen Lösung von Copolymerisat A in Ethylacetat 2 Stunden unter Rückfluß und gibt anschließend 500 Teile von dem in Beispiel 1 angegebenen Versaticsäuremonoestergemisch zu. Man dampft dann, wie in Beispiel 1 angegeben, ein und erhält nach dem Abdampfen des Ethylacetats eine bei Raumtemperatur fließende Mischung, die bei 50°C eine Viskosität von 78000 mPas (D = 21,51/s) hat. (= Vergleichsgemisch 1)

Beispiel 2

Man arbeitet wie in Beispiel 1 angegeben, gibt jedoch nach der Zugabe des Versaticsäuremonoestergemisches zusätzlich 20 Teile 2,4,6-Trimethylbenzoyldiphenylphosphinoxid zu. Nach Abdampfen des Ethylacetats, wie in Beispiel 1 beschrieben, erhält man eine freifließende, mit UV-Licht vernetzbare Haftklebemischung. (= Haftklebergemisch 2)

Vergleichsversuch 2

Man arbeitet wie in Vergleichsversuch 1 angegeben, gibt jedoch nach Zugabe des Versaticsäuremonoestergemisches 20 Teile des in Beispiel 2 angegebenen Fotoinitiators zu. Nach Abdestillieren des Ethylacetats, wie in Beispiel 1 angegeben, erhält man ein bei Raumtemperatur fließendes Gemisch, das bei 50°C eine Viskosität von 80000 mPas (D = 21,51/s) hat. (=Vergleichsgemisch 2)

Beispiel 3

Man arbeitet wie in Beispiel 2 angegeben, setzt jedoch zum dem Reaktionsgemisch nach Zugabe der Versaticsäuremonoester 500 Teile eines Umsetzungsproduktes aus 5 Teilen Bernsteinsäureanhydrid und 19,5 Teilen Versaticsäuremonoester sowie ein Gemisch aus etwa gleichen Teilen 2,3-Dihydroxypropyl-1-acrylat und 1,3-Dihydroxypropyl-2-acrylat zu. Man arbeitet dann, wie in Beispiel 2 angegeben weiter und erhält nach Abdampfen des Ethylacetats ein bei Raumtemperatur fließendes Gemisch, das 50°C eine Viskosität von 80000 mPas (D = 21,21/s) hat. (= Haftklebergemisch 3)

Vergleichsversuch 3

Man arbeitet wie in Beispiel 3 angegeben, gibt jedoch kein N,N-Diethylaminoethylacrylat zu. Nach Abdestillieren des Ethylacetats erhält man ein Gemisch, das bei 50°C eine Viskosität von 95000 mPas (D = 21,51/s) hat. (= Vergleichsgemisch 3)

Lagerstabilität der Haftklebegemische 1 bis 3 und der Vergleichsgemische 1 bis 3

Zur Prüfung der Haftklebegemische und Vergleichsgemische werden verschlossene Proben zunächst 4 Wochen bei Raumtemperatur gelagert. Nach der Lagerung werden Polyesterfolien auf einem beheizbaren Streichtisch bei 50°C und bei 80°C mit einer Rakel mit den Gemischen beschichtet. Die Ergebnisse der Beschichtungsversuche sind in der folgenden Tabelle 1 zusammengestellt:

Tabelle 1
Ergebnisse der Beschichtungsversuche

| Beispiel bzw. Vergleichsversuch | Beschichtet bei 50°C | 80°C |
|---|---|---|
| Haftklebegemisch 1 | gut beschichtbar glatte, klare Beschichtung | sehr gut beschichtbar glatte, klare Beschichtung |
| Vergleichsgemisch 1 | nicht beschichtbar | schlecht beschichtbar Beschichtung ist streifig |
| Haftklebegemisch 2 | gut beschichtbar glatte, klare Beschichtung | sehr gut beschichtbar glatte, klare Beschichtung |
| Vergleichsgemisch 2 | nicht beschichtbar | schlecht beschichtbar Beschichtung ist streifig |
| Haftklebegemisch 3 | beschichtbar | sehr gut beschichtbar glatte, klare Beschichtung |
| Vergleichsgemisch 3 | nicht beschichtbar | schlecht beschichtbar Beschichtung ist streifig |

Beurteilung der Klebeeigenschaften der Haftklebegemische 1 bis 3 und der Vergleichsgemische 1 bis 3

Zur Beurteilung der Klebeeigenschaften von flächigen Gebilden, die mit den Haftklebegemischen 1 bis 3 und den Vergleichsgemischen 1 bis 3 beschichtet sind, werden Polyesterfolien bei 100°C mit 4 Wochen bei Raumtemperatur gelagerten Haftklebemassen der Beispiele 1 bis 3 und der Vergleichsversuche 1 bis 3 mit jeweils 25 g/m$^2$ beschichtet, was einer Überzugs-Dicke von etwa 25 µm entspricht.

Die elektronenstrahl-vernetzbaren Beschichtungen mit dem Haftklebegemisch 1 und dem Vergleichsgemisch 1 werden mit dem Elektronenstrahl einer Elektron-Curtain-Anlage bestrahlt. Die UV-vernetzbaren Beschichtungen mit den Haftklebemassen 2 und 3 und den Vergleichsgemischen 2 und 3 werden auf dem Endlosband einer UV-Anlage mit einer Geschwindigkeit von 10 m/min unter 2 hintereinander geschalteten Quecksilber-Strahlern einer Strahlungsleistung von jeweils 80 W/cm unter Stickstoff bestrahlt. Von den bestrahlten Folien werden jeweils 2 cm breite Streifen für die Prüfung der Scherstandfestigkeit und Schälfestigkeit verwendet:

Beim Schältest werden die Prüfstreifen auf eine verchromte Platte aufgelegt und parallel zur Klebeschicht, d.h. unter einem Winkel von 180° abgeschält und die dafür notwendige Kraft gemessen. Die Abzugsgeschwindigkeit beträgt 300 mm/min. und die Messung wird sofort und nach 24 Stunden durchgeführt.

Die Scherstandfestigkeit der Verklebung wird derart gemessen, daß die Prüfstreifen auf ein hochglanzverchromtes Blech mit einer Fläche von 2,0 cm x 2,5 cm aufgepreßt werden. Das Blech wird senkrecht eingespannt und am Ende des Klebestreifens mit einem Gewicht von 1000 g belastet. Es wird dann die Zeit bestimmt bis sich die Verklebung löst. Die Prüfung wird bei 23°C und bei 50°C durchgeführt.

Die Ergebnisse der Klebewertprüfungen sind in den folgenden Tabellen 2 und 3 zusammengestellt.

Tabelle 2
Klebewerte der elektronenstrahlvernetzten Beschichtungen

| | Dosis (kGy) | Schälfestigkeit n. 24 Stunden in N/2 cm | Scherstandfestigkeit in Stunden bei | |
|---|---|---|---|---|
| | | | 23°C | 50°C |
| Haftklebegemisch 1 | 7 | 9,4 | 45 | > 5 |
| Vergleichsgemisch 1 | 7 | 9,0 | 30 | 1 |

Tabelle 3
Klebewerte der UV-vernetzten Beschichtunge

| | Luftsauerstoff-/ Stickstoff-Atmosphäre | Schälfestigkeit n. 24 Stunden in N/2 cm | Scherfestigkeit in Stunden bei | |
|---|---|---|---|---|
| | | | 23°C | 50°C |
| Haftklebegemisch 2 | N | 9,0 | 45 | > 7 |
| Vergleichsgemisch 2 | N | 8,5 | 30 | 4 |
| Haftklebergemisch 3 | N | 9,7 | >50 | >3 |
| Vergleichsgemisch 3 | N | 5,1 | 30 | 2 |

**Patentansprüche**

1. Verfahren zur Herstellung von strahlenvernetzbaren Haftklebegemischen aus
   (a) 5 bis 120 Gew.-Teilen Polymeren einer Glastemperatur unter 0°C und eines K-Wertes von 20 bis 80
   und
   (b) 100 Gew.-Teilen Derivaten von Dihydroxypropyl(meth)acrylsäureestern,
   dadurch gekennzeichnet, daß man 30 bis 85 gew.%ige Lösungen der Polymeren (a) mit den Derivaten (b) und (c) 0,01 bis 0,1 Gew.%, bezogen auf die Polymeren (a), einer tertiären Aminoverbindung mit einer copolymerisierbaren, olefinischen Doppelbindung mischt, das Gemisch auf Temperaturen von 80 bis 120°C bis zu 2 Stunden erhitzt und dann das Lösungsmittel ggf. bei vermindertem Druck abtrennt.

2. Verfahren nach Anspruch 1, dadurch gekennzeichnet, daß dem Gemisch ein üblicher Fotoinitiator zugesetzt wird.

3. Verfahren nach den Ansprüchen 1 und 2, dadurch gekennzeichnet, daß dem Gemisch 5 bis 40 Gew.%, bezogen auf die Menge an Polymeren (a) eines üblichen klebrigmachenden Harzes zugesetzt wird.

4. Verfahren nach den Ansprüchen 1 bis 3, dadurch gekennzeichnet, daß dem Gemisch 0,1 bis 10 Gew.%, bezogen auf die Menge an den Derivaten (b) einer mehrfach olefinisch ungesättigten Verbindung zugesetzt werden.

## Claims

1. A process for the preparation of a radiation-crosslinkable contact adhesive mixture from
   (a) from 5 to 120 parts by weight of polymers having a glass transition temperature of less than 0°C and a K value of from 20 to 80
   and
   (b) 100 parts by weight of derivatives of dihydroxypropyl (meth)acrylates,
   wherein 30-85% strength by weight solutions of the polymers (a) are mixed with the derivatives (b) and (c) from 0.01 to 0.1% by weight, based on the polymers (a), of a tertiary amino compound having a copolymerizable, olefinic double bond, the mixture is heated at 80-120°C for not more than 2 hours and the solvent is then separated off under atmospheric or reduced pressure.

2. A process as claimed in claim 1, wherein a conventional photoinitiator is added to the mixture.

3. A process as claimed in claim 1 or 2, wherein from 5 to 40% by weight, based on the amount of polymers (a), of a conventional tackifier are added to the mixture.

4. A process as claimed in any of claims 1 to 3, wherein from 0.1 to 10% by weight, based on the amount of the derivatives (b), of a polyolefinically unsaturated compound are added to the mixture.

## Revendications

1. Procédé de préparation de mélanges d'adhésif de contact, réticulables par irradiation, à partir de
   (a) 5 à 120 parties en poids de polymères ayant une température de transition vitreuse inférieure à 0°C et une valeur K de 20 à 80
   et
   (b) 100 parties en poids de dérivés de (méth)acrylate de dihydroxypropyle,
   caractérisé en ce qu'on mélange des solutions à 30-85% en poids des polymères (a) avec les dérivés (b), et (c) avec 0,01 à 0,1% en poids, par rapport aux polymères (a), d'un composé aminé tertiaire contenant une double liaison oléfinique copolymérisable, on chauffe le mélange à des températures de 80 à 120°C pendant une période pouvant durer jusqu'à 2 h, puis on sépare le solvant, éventuellement sous pression réduite.

2. Procédé selon la revendication 1, caractérisé en ce qu'un photo-initiateur usuel est ajouté au mélange.

3. Procédé selon la revendication 1 ou 2, caractérisé en ce qu'on ajoute au mélange 5 à 40% en poids, par rapport à la quantité de polymères (a), d'une résine usuelle, propre à le rendre gluant.

4. Procédé selon l'une quelconque des revendications 1 à 3, caractérisé en ce que 0,1 à 10% en poids, par rapport à la quantité des dérivés (b), d'un composé à plusieurs insaturations oléfiniques sont ajoutés au mélange.